# EUROPÄISCHE PATENTSCHRIFT

(11) **EP 1 765 077 B1**
(45) Veröffentlichungstag und Bekanntmachung des Hinweises auf die Patenterteilung: **21.05.2008**
(21) Anmeldenummer: 05755961.9
(22) Anmeldetag: 23.06.2005
(51) Int. Cl.: A01N 43/12

(54) **VERWENDUNG VON 3-(2,4,6-TRIMETHYLPHENYL)-4-NEOPENTYLCARBONYLOXY-5,5-TETRAMETHYLEN-DIHYDROFURAN-2-ON ZUR BEKÄMPFUNG VON PSYLLIDEN**
USE OF 3-(2,4,6-TRIMETHYLPHENYL)-4-NEOPENTYLCARBONYLOXY-5,5-TETRAMETHYLENE-N-DIHYDROFURAN-2-ON FOR CONTROLLING PSYLLIDAE
UTILISATION DE 3-(2,4,6-TRIMETHYLPHENYL)-4-NEOPENTYL-CARBONYLOXY-5,5-TETRAMETHYLE-SG(D)-DINYDROFURAN-2-ONE POUR LUTTER CONTRE LE PSYLLIDES

(30) Priorität: 05.07.2004 DE 102004032420
(43) Veröffentlichungstag der Anmeldung: 28.03.2007
(73) Patentinhaber: Bayer CropScience AG, 40789 Monheim (DE)
(72) Erfinder: BRETSCHNEIDER, Thomas, 53797 Lohmar (DE); FISCHER, Reiner, 40789 Monheim (DE); BRÜCK, Ernst, 51467 Bergisch Gladbach (DE)
(86) Internationale Anmeldenummer: PCT/EP2005/006780
(87) Internationale Veröffentlichungsnummer: WO 2006/002824

(56) Entgegenhaltungen:
- EP-A- 0 528 156
- WO-A-00/42850

## Beschreibung

Die vorliegende Anmeldung betrifft die Verwendung von 3-(2,4,6-Trimethylphenyl)-4-neopentylcarbonyloxy-5,5-tetramethylen-Δ³-dihydrofuran-2-on zur Bekämpfung von Insekten aus der Familie Psyllidae (Blattflöhe).

Die Verbindung 3-(2,4,6-Trimethylphenyl)-4-neopentylcarbonyloxy-5,5-tetramethylen-Δ³-dihydrofuran-2-on ist aus der EP-A-0 528 156 bekannt.

Weiterhin ist bekannt, dass unter bestimmten Bedingungen Spirodiclofen eine ovozide Wirkung gegen Psylliden zeigt. Der Anwendungszeitpunkt ist jedoch sehr limitiert, (De Maeyer et al.; BCPC-Conference (2002), Vol. 1,65-72).

Ferner ist aus der EP-A-0 528 156 bekannt, dass 3-(2,4,6-Trimethylphenyl)-4-neopentylcarbonyloxy-5,5-tetramethylen-Δ³-dihydrofuran-2-on akarizid und gegen Insekten aus der Familie Aleyrodidae wirksam ist.

Überraschenderweise wurde jetzt gefunden, dass 3-(2,4,6-Trimethylphenyl)-4-neopentylcarbonyloxy-5,5-tetramethylen-Δ³-dihydrofuran-2-on besonders gut zur Bekämpfung von Insekten aus der Familie Psyllidae geeignet ist und darüber hinaus eine wesentlich bessere Wirkung aufweist als Spirodiclofen.

Die vorliegende Erfindung betrifft demnach die Verwendung von 3-(2,4,6-Trimethylphenyl)-4-neopentylcarbonyloxy-5,5-tetramethylen-Δ³-dihydrofran-2-on zur Bekämpfung von Insekten aus der Familie Psyllidae.

3-(2,4,6-Trimethylphenyl)-4-neopentylcarbonyloxy-5,5-tetramethylen-Δ³-dihydrofuran-2-on besitzt die folgende Formel (I):

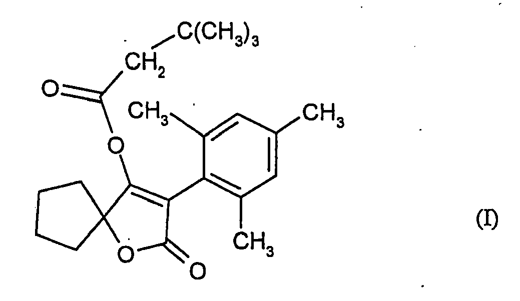

Die Verbindung der Formel (I) kann bevorzugt für die Bekämpfung von Insekten aus den Gattungen Psylla, Diaphorina, Trioza, Paratrioza, Tenalaphara, Agonoscena eingesetzt werden. Beispielhaft seien folgende Arten genannt: Psylla costalis, Psylla pyricola, Psylla pyrisuga, Psylla mali, Psylla piri, Diaphorina citri, Trioza erythrea, Paratrioza cockerelli, Tenalaphara malayensis (als) Allocarsidara malayensis (neu).

Grundsätzlich kann die Verbindung der Formel (I) in einer Vielzahl von Kulturen eingesetzt werden, bevorzugt in Kernobst (z.B. Äpfeln, Birnen), Gemüse (z.B. Tomaten, Chillis, Auberginen, Mören, Bohnen, Paprika), Kartoffeln, Zierpflanzen, Citrus (z.B. Orangen, Grapefruits, Mandarinen), tropischen Kulturen wie z.B. Durians, Steinobst (z.B. Kirschen Pflaumen, Zwetschgen), Nüssen (z.B. Pistazien).

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit dem Wirkstoff erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injezieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais); StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Der Wirkstoff der Formel (I) kann in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

### Herstellung der Verbindung der Formel (I):

5.45 g (20 mmol) 3-(2,4,6-Trimethylphenyl)-4-hydroxy-5,5-tetramethylen-Δ³-dihydrofuran-2-on (bekannt aus EP-A-0 528 156) werden in 80 ml Dichlormethan vorgelegt, 3.04g (30 mmol) Triethylamin zugesetzt und anschließend bei 0-10°C eine Lösung von 3,50 g (26 mmol) 3,3-Dimethylbuttersäurechlorid in 20 ml Dichlormethan zugetropft.

Nach 2 Stunden werden weitere 0,50 g (5 mmol) Triethylamin und 0,40 g (3 mmol) Säurechlorid zugesetzt und weitere 16 Stunden bei Raumtemperatur gerührt.

Zur Aufarbeitung wäscht man 2 mal mit 10 %iger Citronensäure und 2 mal mit IN Natronlauge, trocknet die organische Phase mit Natriumsulfat und engt ein.

Ein weitere Reinigung des Rohproduktes erreicht man durch Verreiben mit Petrolether, absaugen und trocknen.

Ausbeute: 4.50 g weißer Feststoff (61 % d. Th.) vom Schmelzpunkt: 98°C.

### Anwendungsbeispiel

### Beispiel A

| | |
|---|---|
| Schädling: | Trioza erythreae |
| | |
| Pflanze: | Orange |

Die Verbindung der Formel (I) (240 SC) wurde mit einer Aufwandmenge von 144 g a.i./ha + 0,2 % a.i. Rapsölmethylester (RME) mit 540 l/ha Wasser im Vergleich zu Spirodiclofenaufwandmengenvergleich geprüft.

Die Spritzung erfolgte mittels eines Pressluft-getriebenen Rückengerätes.

Der Versuch wurde mit einem Baum pro Parzelle und drei Wiederholungen durchgeführt. Dabei erfolgten je zwei Applikationen im Abstand von einer Woche.

Die Wirksamkeit gegen Blattflöhe wurde durch Zählen der Anzahl lebender Tiere auf 20 Blättern pro Baum 7 Tage nach der ersten Behandlung und 7 und 13 Tagen nach der letzten Anwendung ermittelt. Der Wirkungsgrad wurde mit Hilfe der Abbott-Formel berechnet.

| **Verbindung** | **Aufwandmenge g/ha** | **Wirkungsgrad in % Abbott** | | |
|---|---|---|---|---|
| | | **7TNAA** | **7TNAB** | **13TNAB** |
| Verbindung der Formel (I) | 144 | 95 | 97,5 | 95,2 |
| 240 SC | | | | |
| + 0,2 % RME | | | | |
| Spirodiclofen | 144 | 80,3 | 91,5 | 88,1 |
| 240 SC | | | | |
| + 0,2 % RME | | | | |

### Beispiel B

| | |
|---|---|
| Schädling. | Paratrioza cockerelli |
| | |
| Pflanze: | Tomate |

Die Verbindung der Formel (I) (240 SC) wurde mit einer Aufwandmenge von 72 g a.i./ha mit einer Wasseraufwandmenge von 345 l/ha im Vergleich zu Leverage (48 g a.i./ha Imidacloprid + 33 g a.i./ha Cyfluthrin) getestet.

Die Spritzung erfolgte mittels eines handgetriebenen-Rückengeräts.

Der Versuch wurde mit Parzellen von 10 m² und drei Wiederholungen durchgeführt. Dabei erfolgten je zwei Applikationen im Abstand von einer Woche.

Die Wirksamkeit gegen Blattflöhe wurde durch Zählen lebender Tiere an 10 Blättern 7 Tage nach der ersten Behandlung und 7 und 14 Tage nach der zweiten Anwendung ermittelt. Der Wirkungsgrad wurde mit Hilfe der Abbott-Formel berechnet.

| **Verbindung** | **Aufwandmenge g/ha** | **Wirkungsgrad in % Abbott** | | |
|---|---|---|---|---|
| | | **7TNAA** | **7TNAB** | **14TNAB** |
| Verbindung der Formel (I) | 72 | 80,3 | 84,8 | 98,7 |
| 240 SC | | | | |
| Leverage Imidacloprid + Cyfluthrin | 48 | 75,4 | 81,1 | 92,1 |
| | + | | | |
| | 33 | | | |

## Patentansprüche

1. Verwendung der Verbindung der Formel (I) 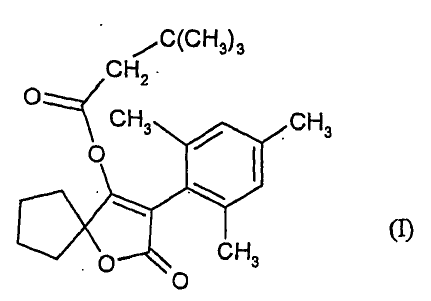 zur Bekämpfung von Insekten aus der Familie Psyllidae (Blattflöhe).

## Claims

1. Use of the compound of the formula (I) 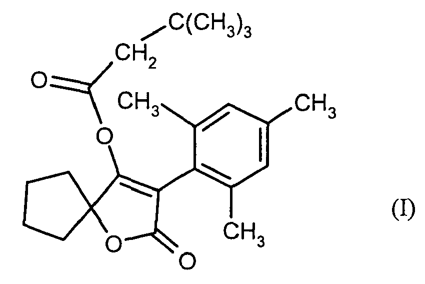 for controlling insects of the family Psyllidae (psyllids).

## Revendications

1. Utilisation du composé de formule (I) 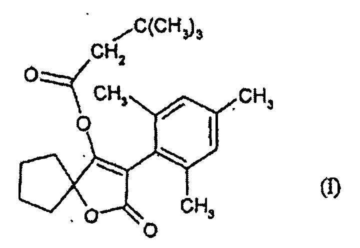 pour la lutte contre des insectes de la famille des Psyllidae (psylles).
